# EUROPÄISCHE PATENTSCHRIFT

(11) **EP 0 361 633 B1**
(45) Veröffentlichungstag und Bekanntmachung des Hinweises auf die Patenterteilung: **27.04.1994**
(21) Anmeldenummer: 89250045.5
(22) Anmeldetag: 27.09.1989
(51) Int. Cl.: H02B 11/127

(54) **Verstellantrieb zum Verfahren eines Leistungsschalters**
Adjusting drive to operate a power switch
Entraînement réglable pour le déplacement d'un interrupteur

(30) Priorität: 28.09.1988 US 250792
(43) Veröffentlichungstag der Anmeldung: 04.04.1990
(73) Patentinhaber: SIEMENS AKTIENGESELLSCHAFT, 80333 München (DE)
(72) Erfinder: Leone, David A., Lawrenceville Georgia 30244 (US); Leonard, James H., Albemarle N.C. 28001 (US)

(56) Entgegenhaltungen:
- US-A- 2 702 324
- US-A- 4 002 864
- US-A- 4 209 676
- US-A- 4 728 757

## Beschreibung

Die Erfindung betrifft einen Verstellantrieb zum Verfahren eines Leistungsschalters relativ zu ortsfesten Stromschienen an Fahrschienen, mit einer durch einen hin- und hergehend schwenkbar gelagerten Betätigungshandgriff drehbaren Welle, die ein Klinkenrad trägt, das mittels des hin- und hergehend schwenkbar gelagerten Betätigungshandgriffes unter Zwischenschaltung eines Klinkengestänges schrittweise drehbar ist, um je ein jedem Ende der Welle zugeordnetes Kulissenstück und je einen zum Eingreifen in das zugehörige Kulissenstück vorgesehenen Zapfen relativ zueinander zu bewegen.

Ein Verstellantrieb dieser Art ist durch die US-A-2 702 324 bekanntgeworden. Dabei wird von dem hohen mechanischen Wirkungsgrad von Klinkensperren Gebrauch gemacht, der es erlaubt, mit einer verhältnismäßig geringen Kraft am Betätigungshandgriff eine große Kraft auf den Leistungsschalter auszuüben. Diese hohen Kräfte werden benötigt, um die Reibungskräfte von Trennkontaktanordnungen zu überwinden, mit denen Niederspannungs-Leistungsschalter für hohe Nennströme ausgerüstet sind.

Der vorstehend erwähnte bekannte Verstellantrieb arbeitet mit einer gemeinsamen Klinke für die Einfahr- und die Ausfahrbewegung. Die Klinke wird selbsttätig umgestellt, um sie für die eine oder die andere Fahrrichtung des Leistungsschalters wirksam zu machen. Dies ist zwar für den Benutzer bequem, bringt jedoch die Gefahr mit sich, daß die jeweils aktive Betätigungsrichtung nicht erkennbar ist oder daß sich der Leistungsschalter in der nicht erwartenden Richtung in Bewegung setzt, wenn der Betätigungshandgriff bedient wird.

Der Erfindung liegt die Aufgabe zugrunde, den Verstellantrieb bei nicht ausgelöstem Leistungsschalter sperren zu können und zur Steigerung der Sicherheit die Möglichkeit für eine Anzeige der Stellung des Leistungsschalters relativ zu den ortsfesten Stromschienen zu schaffen.

Gemäß der Erfindung wird diese Aufgabe dadurch gelöst, daß an dem Klinkengestänge eine Einfahrklinke sowie eine Ausfahrklinke angebracht sind, und daß ein Klinkensteuerglied für den wahlweisen Eingriff der Einfahrklinke oder der Ausfahrklinke in die Verzahnung des Klinkenrades vorgesehen ist, wobei das Klinkensteuerglied als ein längs des Klinkengestänges verschiebbar angeordnetes stangenartiges Teil ausgebildet ist, das nach Art von Steuerkurven wirkende Ausnehmungen für die Schwenkung der Einfahrklinke bzw. der Ausfahrklinke relativ zu der Verzahnung des Klinkenrades aufweist, und wobei ferner die Zapfen bewegbar und die Kulissenstücke ortsfest angeordnet sind.

Das Klinkensteuerglied wird nach gewünschter Bewegungsrichtung des Leistungsschalters eingestellt und kann auch in eine neutrale Position gebracht werden, in der keine Kraft auf das Klinkenrad übertragen werden kann.

Die erwähnte Funktion der Blockierung des Verstellantriebes bei eingeschaltetem Leistungsschalter ist in vorteilhafter Weise dadurch zu erreichen, daß an der Welle ein Eingriffrad befestigt ist und daß eine längs verschiebbar angeordnete Sperrstange und ein gelenkig mit dieser verbundener Freigabehebel vorgesehen sind, der eine Auslösestange mit einem Auslösehebel des Leistungsschalters in Verbindung steht. Dabei kann das Eingriffrad an seinem Umfang Nuten entsprechend einer Anzahl von Stellungen des Leistungsschalters relativ zu den Stromschienen besitzen und die Sperrstange kann an ihrem Ende entsprechend der Gestalt der Nuten geformt sein. Auf diese Weise wird eine Drehung der Welle verhindert, solange die Sperrstange in eine der Nuten des Eingriffrades eingreift. Wird die Sperrstange aus dieser Stellung herausbewegt, so wird zwangsläufig der Leistungsschalter ausgelöst.

Wie bereits erwähnt, ist an jedem Ende der Welle ein Kulissenstück und ein mit diesem zusammenwirkender Zapfen zugeordnet. Diese Anordnung sorgt für einen symmetrischen Kraftangriff, durch den ein Verkanten beim Verfahren des Leistungsschalters vermieden wird. In diesem Zusammenhang empfiehlt es sich, daß die Zapfen als mit der Welle verbundene Kurbelzapfen ausgebildet sind, wobei der eine Zapfen an dem Eingriffrad angebracht ist.

Ferner kann die Drehung der Welle für eine zuverlässige Anzeige der Stellung des Leistungsschalters relativ zu dem ortsfesten Stromschienen benutzt werden. Hierzu kann auf der Welle eine Nockenscheibe befestigt sein und es kann ein Fühlhebel zur Übertragung der Stellung der Nockenscheibe auf eine frontseitig am Leistungsschalter verschiebbar gelagerte Anzeigeplatte vorgesehen sein.

Die Erfindung wird im folgenden anhand des in den Figuren dargestellten Ausführungsbeispieles näher erläutert.

Die Figur 1 zeigt einen dreipoligen Leistungsschalter schematisch in der Draufsicht in Verbindung mit einem Einschubrahmen in einer solchen Stellung, daß am Leistungsschalter befindliche Trennkontaktblöcke ortsfeste Stromschienen berühren.

Die Figuren 2 und 2a zeigen den Leistungsschalter gemäß der Figur 1 in einer Seitenansicht, und zwar in der vollständig eingefahrenen bzw. vollständig herausgefahrenen Stellung.

In der Figur 3 ist gleichfalls in einer Seitenansicht eine Sperrvorrichtung gegen ein Verfahren des Leistungsschalters in eingeschalteten Zustand sowie eine Anzeigevorrichtung für die Stellung des Leistungsschalters relativ zu ortsfesten Stromschienen dargestellt.

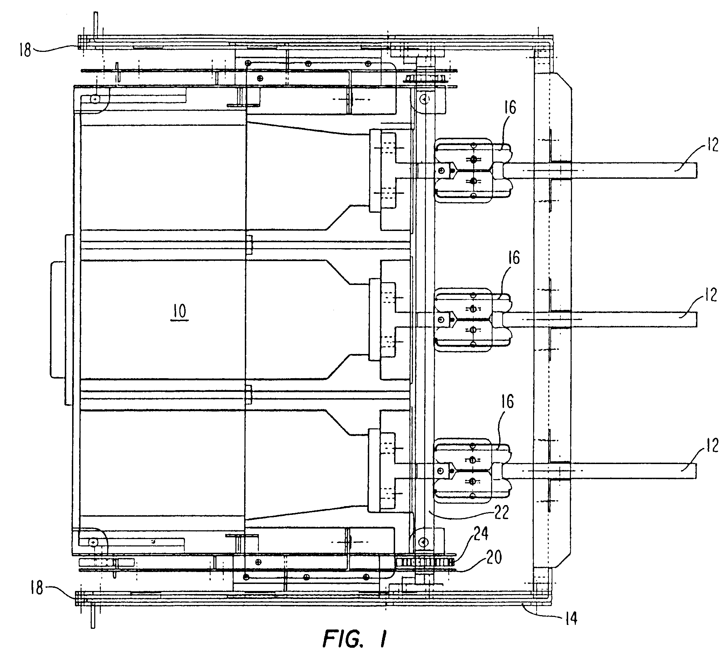

In der Figur 1 ist ein dreipoliger Leistungsschalter 10 gezeigt, der sich mit seinen Trennkontaktblöcken 16 teilweise im Eingriff mit ortsfesten Stromschienen 12 befindet. Der Leistungsschalter 10 ist in einem Einschubrahmen 14 verschiebbar angeordnet. Ein Verstellantrieb dient zur Bewegung des Leistungsschalters 10 entlang Schienen 18. Der Leistungsschalter 10 und die Schienen 18 sind durch Rollenanordnungen 21 unterstützt und geführt, wobei die Schienen 18 zusätzlich Rollen 19 aufweisen, um die zur Bewegung des Leistungsschalters 10 benötigte Kraft zu verringern. Der Verstellantrieb ist so ausgebildet, daß die Reibung zwischen den Stromschienen 12 und den Trennkontaktblöcken 16 überwunden werden kann, um den Leistungsschalter 10 mit den Stromschienen 12 in Eingriff zu bringen oder hiervon zu trennen.

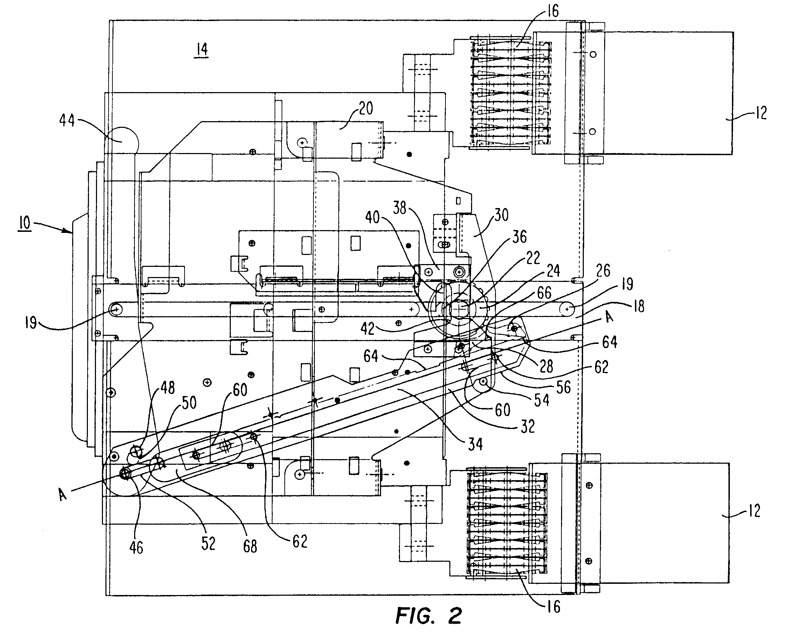

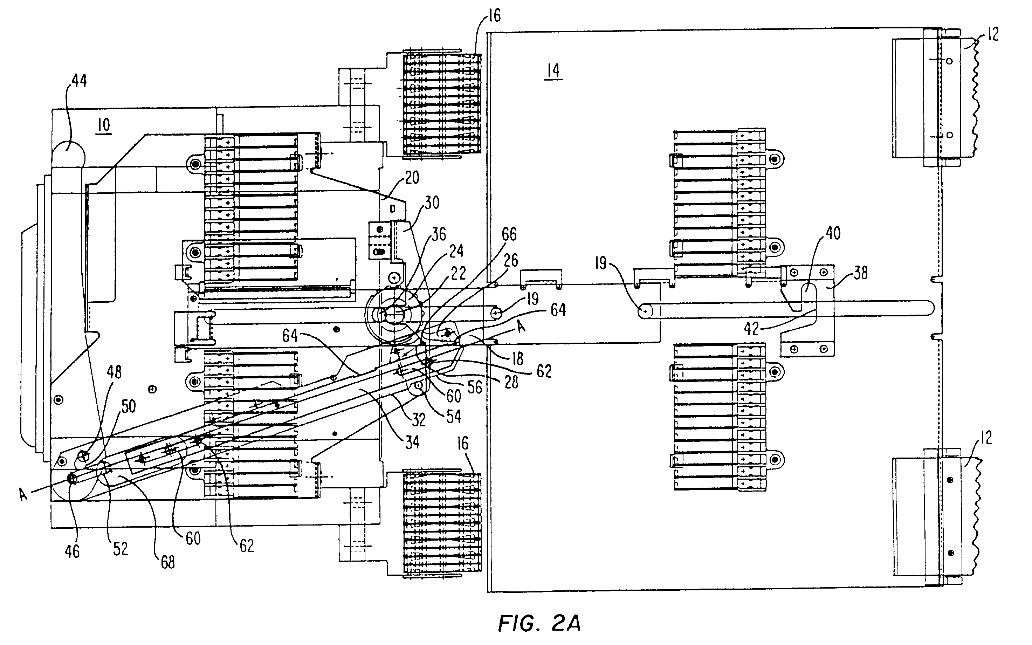

Die Figur 2 veranschaulicht den Leistungsschalter 10 in seiner mit den Stromschienen 12 voll im Eingriff befindlichen Stellung. In der Figur 2 ist auch der Verstellantrieb des Leistungsschalters 10 dargestellt. Der Verstellantrieb umfaßt einen Seitenrahmen 20, einen an dem Leistungsschalter 10 mittels eines Lagerteiles 30 drehbar gelagerte Welle 22, ein auf der Welle 22 befestigtes Klinkenrad 24, eine Einfahrklinke 28, eine Ausfahrklinke 26, ein Klinkengestänge 32, ein Klinkensteuerglied 34 sowie einen Kurbelzapfen 36 und ein Kulissenstück 38. Um den durch das Klinkengestänge und das Klinkensteuerglied beanspruchten Raum möglichst gering zu halten, können diese Teile mit den in den Figuren 2 und 2a gezeigten Formen aus Stangenmaterial gestanzt sein.

Um den Leistungsschalter 10 zum Eingriff mit den ortsfesten Stromschienen 12 zu bringen wird der Leistungsschalter entlang den Fahrschienen 18 derart bewegt, daß der Kurbelzapfen 36 in das Kulissenstück 38 eingreift. Da der Kurbelzapfen 36 an dem Klinkenrad 24 befestigt ist, greift der Kurbelzapfen 36 in die Ausnehmung 40 des Kulissenstückes 38 ein, wenn das Klinkenrad 24 entgegen dem Uhrzeigersinn gedreht wird. Wenn der Kurbelzapfen 36 in die Ausnehmung 40 eingegriffen hat, befindet sich der Leistungsschalter 10 fest im Eingriff mit den ortsfesten Stromschienen 12.

Zur Trennung des Leistungsschalters 10 von den Stromschienen 12 wird der Leistungsschalter 10 beim Drehen des Klinkenrades 24 im Uhrzeigersinn entlang den Fahrschienen 18 bewegt. Dabei übt der Kurbelzapfen 36 eine Kraft gegen eine rückseitige Arbeitsfläche 42 des Kulissenstückes 38 aus. Der Kurbelzapfen 36 ist auf dem Klinkenrad 24 derart befestigt, daß der Kurbelzapfen 36 einen ausreichenden Hub ausführt, um bei der Drehung des Klinkenrades 24 die Trennkontaktblöcke 16 von den Stromschienen 12 abzuziehen. Anschließend laßt sich der Leistungsschalter 10 aus dem Einschubträger 14 entlang den Fahrschienen 18 von Hand verschieben.

Im allgemeinen wird das Klinkenrad 24 in beiden Drehrichtungen durch Pumpbewegungen eines Betätigunghandgriffes 44 gedreht. Der Betätigungshandgriff 44 schwenkt dabei hin- und hergehend um ein Hebelschwenklager 46 und bewirkt dabei, daß ein Stift 48, der an dem Klinkengestänge 32 befestigt ist, sich in einem Schlitz 50 in dem Betätigungshandgriff 44 gleitend verschiebt und das Klinkengestänge 32 entlang einer Linie A-A verschiebt. Entlang der Linie A-A ist das Klinkengestänge 32 durch das Zusammenwirken eines Gelenkstiftes 46, von Schlitzen 52, eines Stiftes 54 und einer Führungskante 56 geführt.

Zur Drehung des Klinkenrades 24 in der entgegengesetzten Richtung wird die Ausfahrklinke 26 veranlaßt, in das Klinkenrad 24 einzugreifen, während die Einfahrklinke 28 von der Verzahnung des Klinkenrades 24 abgehoben ist. Wie anhand der Figuren 2 und 2a zu erkennen ist, erfolgt die Drehung des Klinkenrades 24 entgegen dem Uhrzeigersinn durch die Einfahrklinke 28, während zur Drehung im Uhrzeigersinn die Ausfahrklinke 26 dient. Beide Klinken 26 und 28 sind hebelartig schwenkbar an dem Klinkengestänge 32 angebracht.

Die Wirksamkeit der Ausfahrklinke 26 oder der Einfahrklinke 28 wird durch ein Klinkensteuerglied 34 beeinflußt, das zu einer Verschiebung in der Längsrichtung des Klinkengestänges 32 mit Langlöchern 60 versehen ist, die mit Stiften 62 zusammenwirken. Wenn sich das Klinkensteuerglied 34 in seiner linken Endstellung entsprechend der Figur 2 befindet, wirken eine Ausnehmung 64 in dem Klinkensteuerglied 34 und eine Feder 66 an dem Klinkengstänge 32 derart zusammen, daß die Ausfahrklinke 26 in die Verzahnung des Klinkenrades 24 eingreift. In seiner rechten Endstellung wirkt eine weitere Ausnehmung 64 des Klinkensteuergliedes 34 und eine Feder 66 derart zusammen, daß die Einfahrklinke 28 das Klinkenrad 24 erfaßt. Ein Steuerhebel 68 dient zur Beeinflussung der Stellung des Klinkensteuergliedes 34. Auf diese Weise kann das Klinkensteuerglied 34 auch so eingestellt werden, daß weder die Ausfahrklinke 26 noch die Einfahrklinke 28 das Klinkenrad 24 erfaßt. In dieser Stellung wird eine unbeabsichtigte Betätigung des Verstellantriebes vermieden.

Um eine zu weitgehende Verschiebung des Leistungsschalters 10 zu vermeiden, ist das Klinkenrad 24 entlang einem Teil seines Umfanges ohne Verzahnung ausgeführt. Dementsprechend sind die Einfahrklinke 28 un die Ausfahrklinke 26 in diesen Teil des Umfanges des Klinkenrades 24 nicht wirksam. Eine Verschiebung des Leistungsschalters 10 ist bei dieser Einstellung des Verstellantriebes somit ausgeschlossen.

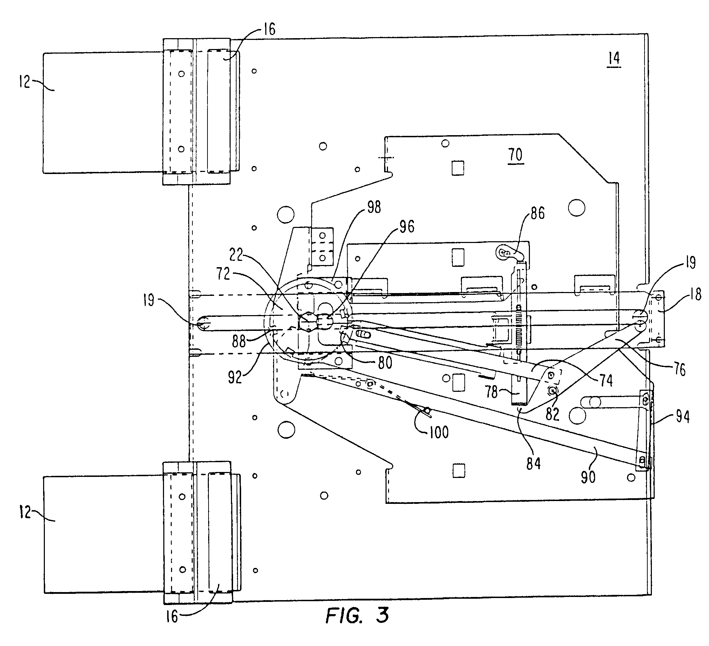

Eine wesentliche Sicherheitseinrichtung des Verstellantriebes besteht darin, daß ein Schließen und Öffnen der Trennkontakte verhindert wird, wenn der Leistungsschalter nicht ausgelöst ist. In dem Beispiel gemäß der Figur 3 geschieht dies dadurch, daß eine Drehung des Klinkenrades 24 durch eine Sperrung der Welle 22 verhindert wird. Der hierzu dienende Sperrmechanismus weist einen Seitenrahmen 70, ein auf der Welle 22 befestigtes Eingriffrad 72, eine Sperrstange 74, einen Freigabehebel 76 und eine verschiebbare Auslösestange 78 auf. Wenn die Trennkontaktblöcke 16 des Leistungsschalters 10 mit den Stromschienen 12 im Eingriff stehen, erfaßt die Sperrstange 74 eine Nut 80 am Umfang des Eingriffrades 72, wodurch die Welle 22 an der Drehung gehindert ist. Um die Sperrstange 74 außer Eingriff mit der Nut 80 zu bringen, wird der Freigabehebel 76 im Uhrzeigersinn um das Lager 82 geschwenkt, wodurch die Sperrstange 74, welche schwenkbar an dem Freigabehebel 76 angebracht ist, außer Eingriff mit der Nut 80 gelangt. Zusätzlich veranlaßt ein Tastfinger 84 des Freigabehebels 76 bei der Drehung des Freigabehebels 76 im Uhrzeigersinn eine Aufwärtsbewegung der Auslösestange 78, um einen Auslösehebel 86 des Leistungsschalters 10 aufwärts zu bewegen und im Sinne der Auslösung des Leistungsschalters 10 zu betätigen.

Das Eingriffrad 72 umfaßt auch ein Nut 88, die eine Drehung der Welle 22 verhindert, nachdem der Leistungsschalter 10 von den Stromschienen 12 getrennt worden ist. Dementsprechend muß der Freigabehebel 76 im Uhrzeigersinn geschwenkt werden, um die Sperrstange 74 außer Eingriff mit dem Eingriffrad 72 zu bringen, bevor der Leistungsschalter 10 wieder in Eingriff mit den Stromschienen 12 gebracht werden kann. Dies stellt sicher, daß der Leistungsschalter 10 durch die Auslösestange 78 ausgelöst ist, bevor der Leistungsschalter 10 wieder in Eingriff mit den Stromschienen 12 gebracht wird. Um Zwischenstellungen des Leistungsschalters 10 zu ermöglichen, können zusätzliche Nuten 73 vorgesehen sein, wobei dennoch sichergestellt ist, daß der Leistungsschalter 10 ausgelöst ist, bevor er wieder mit den Stromschienen 12 in Eingriff gelangt.

Um eine gleichmäßige Bewegung des Leistungsschalters sicherzustellen, ist das Eingriffrad 72 ferner mit einem zweiten Kurbelzapfen 96 versehen, der in ein zweites Kulissenstück 98 eingreift, während der Kurbelzapfen 36 in das Kulissenstück 38 auf der anderen Seite des Leistungsschalters 10 eingreift, wenn die Welle 22 gedreht wird.

Der Seitenrahmen 70 ist auch mit einer Vorrichtung zur Anzeige versehen, ob der Leistungsschalter 10 mit den Stromschienen 12 im Eingriff steht oder nicht. Diese Vorrichtung umfaßt einen Fühlhebel 90, der schwenkbar an dem Rahmen 70 angebracht ist, eine Nockenscheibe 92 auf der Welle 22 und eine Anzeigeplatte 92. Der Drehwinkel der Welle 22 entspricht der Stellung des Leistungsschalters 10 relativ zu den Stromschienen 12, und die Nockenscheibe 92 besitzt einen veränderlichen Durchmesser, der dem Drehwinkel der Welle 22 zugeordnet ist. Somit besteht eine feste Zuordnung zwischen der Nockenscheibe 92 und den wichtigen Stellungen des Leistungsschalters 10. Dementsprechend zeigt der Fühlhebel 90, der durch eine Feder 100 an die Nockenscheibe 92 angelegt ist, die Stellung des Leistungsschalters 10 mittels einer Anzeigeplatte 94 in Abhängigkeit von der Drehung der Welle 22 an.

## Patentansprüche

1. Verstellantrieb zum Verfahren eines Leistungsschalters (10) relativ zu ortsfesten Stromschienen (12) an Fahrschienen (18), mit einer durch einen hin- und hergehend schwenkbar gelagerten Betätigungshandgriff (44) drehbaren Welle (22), die ein Klinkenrad (24) trägt, das mittels des Betätigungshandgriffes (44) unter Zwischenschaltung eines Klinkengestänges (32) schrittweise drehbar ist, um je ein jedem Ende der Welle (22) zugeordnetes Kulissenstück (38, 98) und je einen zum Eingreifen in das zugehörige Kulissenstück (38, 98) vorgesehenen Zapfen (36, 96) relativ zueinander zu bewegen,
**dadurch gekennzeichnet,** daß
an dem Klinkengestänge (32) eine Einfahrklinke (28) sowie eine Ausfahrklinke (26) angebracht sind, und daß ein Klinkensteuerglied (34) für den wahlweisen Eingriff der Einfahrklinke (28) oder der Ausfahrklinke (26) in die Verzahnung des Klinkenrades (24) vorgesehen ist, wobei das Klinkensteuerglied (34) als ein längs des Klinkengestänges (32) verschiebbar angeordnetes stangenartiges Teil ausgebildet ist, das nach Art von Steuerkurven wirkende Ausnehmungen (64) für die Schwenkung der Einfahrklinke (28) bzw. der Ausfahrklinke (26) relativ zu der Verzahnung des Klinkenrades (24) aufweist, und wobei ferner die Zapfen (36,96) bewegbar und die Kulissenstücke (38,98) ortsfest angeordnet ist.

2. Verstellantrieb nach Anspruch 1**,dadurch gekennzeichnet,** daß an der Welle (22) ein Eingriffrad (72) befestigt ist und daß eine längs verschiebbar angeordnete Sperrstange (74) und ein gelenkig mit dieser verbundener Freigabehebel (76) vorgesehen sind, der über eine Auslösestange (78) mit einem Auslösehebel (86) des Leistungsschalters (10) in Verbindung steht.

3. Verstellantrieb nach Anspruch 2, **dadurch gekennzeichnet,** daß das Eingriffrad (72) an seinem Umfang Nuten (80) entsprechend einer Anzahl von Stellungen des Leistungsschalters (10) relativ zu den Stromschienen (12) besitzt und daß die Sperrstange (74) an ihrem einen Ende der Form der Nuten (80) entsprechend geformt ist.

4. Verstellantrieb nach Anspruch 3, **dadurch gekennzeichnet,** daß die Zapfen (36, 96) als mit der Welle verbundene Kurbelzapfen ausgebildet sind, wobei der eine (96) der Zapfen (36, 96) an dem Eingriffrad (72) angebracht ist.

5. Verstellantrieb nach einem der Ansprüche 1 bis 4, **dadurch gekennzeichnet,** daß auf der Welle (22) eine Nockenscheibe (92) befestigt ist und daß ein Fühlhebel (90) zur Übertragung der Stellung der Nockenscheibe (92) auf eine frontseitig am Leistungsschalter (10) verschiebbar gelagerte Anzeigeplatte (94) zur Anzeige der Stellung des Leistungsschalters (10) relativ zu den Stromschienen (12) vorgesehen ist.

## Claims

1. Adjusting drive for displacing a power switch (10) relative to stationary busbars (12) on rails (18), with a shaft (22) which is rotatable by means of an actuating handle (44) pivotally mounted so as to reciprocate and which carries a pawl gear (24), which can be rotated stepwise by means of the actuating handle (44) through the interconnection of a pawl rod system (32) in order to effect the relative movement of a carriage element (38, 98) associated with each end of the shaft (22) and a journal (36, 96) provided for engagement in the associated carriage element (38, 98), characterised in that an engagement pawl (28) and a withdrawal pawl (26) are fitted on the pawl rod system (32), and a pawl control element (34) is provided for the selective meshing of the engagement pawl (28) or withdrawal pawl (26) in the toothing of the pawl gear (24), the pawl control element (34) being constructed as a rod-like element which is displaceable along the length of the pawl rod system (32) and which comprises recesses (64) operating in the manner of cams for the pivoting of the engagement pawl (28) or withdrawal pawl (26) relative to the toothing of the pawl gear (24), and wherein furthermore the journals (36, 96) are displaceable and the carriage elements (38, 98) are stationary.

2. Adjusting drive according to claim 1, characterised in that an engagement wheel (72) is secured to the shaft (22) and a longitudinally displaceably arranged locking rod (74) is provided as well as a release lever (76), which is articulatedly connected to the locking rod and is connected via a trigger rod (78) to a trigger lever (86) of the power switch (10).

3. Adjusting drive according to claim 2, characterised in that the engagement wheel (72) comprises slots (80) around its circumference corresponding to the number of positions of the power switch (10) relative to the busbars (12), and in that the locking rod (74) is shaped at one end to fit the slots (80).

4. Adjusting drive according to claim 3, characterised in that the journals (36, 96) are constructed as crank journals connected to the shaft, one (96) of the journals (36, 96) being fitted on the engagement wheel (72).

5. Adjusting drive according to one of claims 1 to 4, characterised in that a cam disc (92) is secured to the shaft (22) and in that a sensor lever (90) is provided for transmitting the position of the cam disc (92) to a display plate (94) displaceably arranged on the front side of the power switch (10) in order to display the position of the power switch (10) relative to the busbars (12).

## Revendications

1. Dispositif d'entraînement de réglage pour le déplacement d'un disjoncteur (10), par rapport à des barres conductrices (12), sur des rails de déplacement (18), comportant un arbre (22) pouvant être entraîné en rotation à l'aide d'une poignée d'actionnement (44) montée de manière à pouvoir basculer dans un sens et dans l'autre, et qui porte une roue à rochet (24), qui peut être entraînée en rotation pas-à-pas au moyen de la poignée d'actionnement (44) moyennant le montage intercalé d'une tringlerie de cliquet (32), de manière à déplacer, l'un par rapport à l'autre, respectivement un élément de coulisse (38,98) associé à chaque extrémité de l'arbre (22), et un téton (36,96) destiné à s'engager dans l'élément de coulisse associé (38,98), caractérisé par le fait qu'un cliquet d'engagement (28) et un cliquet de dégagement (26) sont montés sur la tringlerie à cliquets (32), et qu'un organe (34) de commande du cliquet est prévu pour, au choix, l'introduction du cliquet d'engagement (28) ou du cliquet de dégagement (26) dans la denture de la roue à rochet (24), l'organe (34) de commande du cliquet étant réalisé sous la forme d'une pièce en forme de barre, disposée de manière à être déplaçable le long de la tringlerie à cliquets (32) et qui possède des évidements (64) agissant à la manière de cames de commande, pour le basculement du cliquet d'engagement (28) ou du cliquet de dégagement (26) par rapport à la denture de la roue à rochet (24), alors, qu'en outre, les tétons (36,96) sont déplaçables et que les éléments de coulisse (38,98) sont montés fixes.

2. Dispositif d'entraînement de réglage suivant la revendication 1, caractérisé par le fait qu'une roue d'engrènement (72) est fixée à l'arbre (22) et qu'il est prévu une barre de blocage (74) disposée à être déplaçable longitudinalement, et un levier de libération (76) raccordé d'une manière articulée à la barre de blocage et qui est raccordé, par l'intermédiaire d'une barre de déclenchement (78), à un levier de déclenchement (86) du disjoncteur (10).

3. Dispositif d'entraînement de réglage suivant la revendication 2, caractérisé par le fait que la roue d'engrènement (72) posséde, sur sa périphérie, des encoches (80) en un nombre correspondant au nombre des positions du disjoncteur (10) par rapport aux barres conductrices (12), et que la barre de blocage (74) est réalisée, au niveau de l'une de ses extrémités, avec une forme correspondant à celle des encoches (80).

4. Dispositif d'entraînement de réglage suivant la revendication 3, caractérisé par le fait que les tétons (36,96) sont réalisés sous la forme de manetons reliés à l'arbre, l'un (96) des tétons (36,96) étant disposé sur la roue d'engrènement (72).

5. Dispositif d'entraînement de réglage suivant l'une des revendications 1 à 4, caractérisé par le fait qu'un disque à cames (92) est fixé sur l'arbre (22) et qu'un levier de détection (90) servant à transmettre la position du disque à cames (92) est prévu sur une plaque indicatrice (94) montée de manière à être déplaçable sur la face avant du disjoncteur (10), pour indiquer la position du disjoncteur (10) par rapport aux barres conductrices (12).
